# EUROPEAN PATENT SPECIFICATION

(11) **EP 4 557 954 B1**
(45) Date of publication and mention of the grant of the patent: **20.05.2026**
(21) Application number: 23739660.1
(22) Date of filing: 15.06.2023
(51) Int. Cl.: A01N 37/46, A01N 65/18, A01P 5/00

(54) **THE CONTROL OF NEMATODES**
NEMATODENBEKÄMPFUNG
CONTROLE DE NÉMATODES

(30) Priority: 18.07.2022 ZA 202207928
(43) Date of publication of application: 28.05.2025
(73) Proprietor: MAGRIX (PTY) LTD., Centurion 0157 (ZA)
(72) Inventor: NOOME, Hildsley, Dagmar, Owen, 0157 CENTURION (ZA); LOCKINGTON, Ian, Richard, THYOLO (MW)
(74) Representative: Nederlandsch Octrooibureau
(86) International application number: PCT/IB2023/056211
(87) International publication number: WO 2024/018300

(56) References cited:
- WO-A1-2010/140981
- WO-A2-2015/155607
- JUMMAI T A ET AL: "Curcin from Jatropha curcas seed as a potential anthelmintic", 22 July 2014 (2014-07-22), XP055354194, Retrieved from the Internet <URL:http://www.netjournals.org/pdf/AMPR/2014/3/14-019.pdf> [retrieved on 20170313]
- MARIA VIVINA B MONTEIRO ET AL: "Anthelmintic activity ofL. seeds on", VETERINARY PARASITOLOGY, ELSEVIER SCIENCE, AMSTERDAM, NL, vol. 182, no. 2, 8 April 2011 (2011-04-08), pages 259 - 263, XP028103661, ISSN: 0304-4017, [retrieved on 20110415], DOI: 10.1016/J.VETPAR.2011.04.010

## Description

THIS INVENTION relates to the control of nematodes. In particular, the invention relates to the use of an isolated and purified curcin or a curcin-like protein in the manufacture of a nematicidal composition, and to a method of controlling nematodes.

Each year substantial losses of agricultural crops contribute to economic downturn and inefficiencies. Plant-parasitic nematodes have been estimated specifically to contribute worldwide to more than US$150 billion in economic losses in the agricultural sector. From the 1950's, the usage of nematicides to combat nematode infections in crops increased dramatically, but many undesirable side effects from the use of chemical toxins as nematicidal compounds have emerged since then. The relatively high and broad-spectrum toxicity and high environmental impact of these chemical toxins, for example, have raised concerns. Fluopyram for example is a well-known nematicide but it has been reported to have a significant negative impact on soil microorganisms, especially respiration and biomass, and that the high persistent behaviour of fluopyram in soil and water/sediment environment can present environmental risks.

As a result of the undesirable side effects of some nematicides, the use of many effective nematicides, e.g., methyl bromide, fenamiphos and aldicarb have become restricted in many countries. There is thus a need for a nematicide, which is regarded as safe to use and which aligns with the sustainable development of modern agriculture, that can control nematodes such as one or more of root-knot nematodes, cyst nematodes and root lesion nematodes, i.e., the three most important nematodes in terms of economic loss.

According to one aspect of the invention, there is provided the use of a nematicidal composition which includes curcin or a curcin-like protein as active nematicidal ingredient.

The nematicidal composition is a composition which is effective in controlling at least some nematodes, or at least some nematodes during at least some developmental stages of the nematodes. Nematodes are soil-dwelling, microscopic, un-segmented, round worms that are parasitic to a plant growing in the soil.

In this specification, curcin or a curcin-like protein is a protein which has at least 90%, or at least 95%, or at least 96%, or at least 97%, or at least 98%, or at least 99%, or 100% sequence identity with the amino acid sequence of SEQ ID NO: 1:

The curcin or curcin-like protein is typically isolated and purified curcin or an isolated and purified curcin-like protein, e.g. curcin or curcin-like protein isolated and purified by means of solvent extraction and chromatography.

The curcin or curcin-like protein may be derived or obtained from natural material.

In one embodiment of the invention, the curcin or curcin-like protein is extracted from natural material.

The natural material may be plant material.

The plant material may be plant material from *Jatropha curcas* (also known as the physic nut). WO2015155607 teaches that he seeds of *Jatropha* contain viscous oil that is reported to possess insecticidal, mollucicidal, fungicidal and nematicidal properties and acknowlegdes its curcin content.

In one embodiment of the invention, the curcin or curcin-like protein is obtained from the seed of *Jatropha curcas.* In another embodiment of the invention, the curcin or curcin-like protein is obtained from leaves of *Jatropho curcas.*

*Jotropho curcas Linn.* is a perennial shrub that belongs to the Euphorbiaceae family. The genus *Jatropha* is distributed throughout the topics and sub-tropics. The seed kernel contains predominantly crude fat oil and protein, including curcin or curcin-like proteins. The Curcin 1 gene, which expresses a Type I curcin precursor, is expressed in the endosperm of Jatropha seeds at late developmental stage, whereas the Curcin 2A gene, which encodes a Type II curcin precursor is mainly expressed in young leaves of *Jatropha curcas.* Due to its toxicity, *Jatropha curcas* oil is not edible.

Curcin is a ribosome-inactivating protein (RIP), i.e. a RNA N-glycosidase that can cause inactivation of eukaryotic ribosomes and inhibition of protein synthesis.

In *Jatropha curcas,* different curcin genes, such as the Curcin 1 gene, the Curcin 2A gene and the Curcin 2B gene, engage with different curcin and curcin-like proteins,.

The curcin or curcin-like protein may be selected from the group of proteins consisting of curcin, curcin C, curcin L, a curcin-like protein expressed in a plant by the Curcin 1 gene, a curcin-like protein expressed in a plant by the Curcin 2 gene, a curcin-like protein expressed in a plant by the Curcin 2a gene, a curcin-like protein expressed in a plant by the Curcin 2b gene, and mixtures of two or more of these curcin or curcin-like proteins.

Instead, or in addition, the curcin or curcin-like protein may be an engineered curcin or curcin-like protein, e.g. a protein designed and synthesised using recombinant protein technology.

The engineered curcin or curcin-like protein may be produced by a transformation/transfection technique.

The engineered curcin or curcin-like protein may be produced by a genetically transformed entity, such as a genetically transformed bacteria, fungi, plant, insect cells, or human or animal cell lines.

In one embodiment of the invention, the genetically engineered curcin or curcin-like protein is obtained from genetically transformed *E. coli.*

The nematicidal composition may include one or more agriculturally acceptable excipients.

Examples of such excipients include a carrier, a dilutant, a solvent, a surface-active agent, a buffer, a stabilizing agent, and an emulsifier.

The nematicidal composition may include one or more other active ingredients, e.g. an insecticide, another nematicide, an acaracide, a fungicide, a plant growth regulator, and/or a fertilizer.

The nematicidal composition, in a concentrated form, may have a curcin or curcin-like protein concentration between about 0.05g/l and about 100 g/l, preferably between about 0.1g/l and about 50g/l, more preferably between about 1g/l and about 10g/l, e.g. about 5g/l.

Typically, the nematicidal composition, in a concentrated form, is provided in a container of a synthetic plastics or polymeric material or in a glass container.

The nematicidal composition may be in the form of a liquid, a dust, or a granule. In other words, the nematicidal composition may be formulated as granules of large particle size (e.g. 400 - 2500 µm), as a wettable powder (e.g. less than 50 µm), as an emulsifiable concentrate, as a solution, and the like.

The invention extends to the use of isolated and purified curcin or a curcin-like protein in the manufacture of a nematicidal composition.

The invention further extends to the use of isolated and purified curcin or a curcin-like protein as a nematicide.

The curcin or curcin-like protein may be as hereinbefore described.

According to another aspect of the invention, there is provided a method of controlling nematodes, the method including administering or applying to the locus of the nematodes to be controlled a nematicidal effective amount of curcin or a curcin-like protein.

The curcin or curcin-like protein may be administered or applied in the form of a nematicidal composition as hereinbefore described.

The nematodes may be selected from the group consisting of root-knot nematodes, cyst nematodes and root lesion nematodes.

The nematodes may be from a wide variety of nematodes, e.g. species of the genera *Heterodera, Globodera, Ditylenchus, Pratylenchus, Xiphinema, Longidorus, Anguina, Helicotylenchus, Hirschmanniella, Hopolainus, Radopholus, Rotylenchulus, Trichodorus, Tylenchulus, Aphelenchoides, Criconemoides, Belonolaimus, Tylenchorhynchus, Paratrichodorus minor,* and *Meloidogyne.*

In one embodiment of the invention, the root-knot nematodes are selected from the genus *Meloidogyne,* e.g., *Meloidogyne javanica.*

The nematodes may in one embodiment of the invention be in the form of eggs, e.g., eggs of the genus *Meloidogyne,* such as eggs of *Meloidogyne javanica.*

The nematodes may in another embodiment of the invention be in the form of females, e.g., females of the genus *Meloidogyne,* such as females of *Meloidogyne javanica.*

The nematodes may in a further embodiment of the invention be in the form of larvae, e.g., larvae of the genus *Meloidogyne,* such as larvae of *Meloidogyne javanica.*

The nematodes may be controlled in fruit crops, vegetable crops and/or cereal crops.

The nematodes may be controlled in a crop selected from the group consisting of corn, potato, soya bean, tobacco, pineapple, nectarine, peach, tomato, apple, onion, wheat, and tea.

In one embodiment of the invention, the nematodes are controlled in a tomato crop.

The nematicidal composition may be administered or applied as a liquid at a concentration of the curcin or curcin-like protein of between about 0.05g/l and about 1.0g/l, preferably between about 0.1g/l and about 0.5g/l, more preferably between about 0.15g/l and about 0.3g/l, e.g., about 0.2g/l.

In one embodiment of the invention, the administration or application of the nematicidal composition to the locus of the nematodes is by spraying the nematicidal composition, as a liquid, on the locus of the nematodes, e.g., on soil within which a crop is growing in which the nematodes are to be controlled. This is one way in which the nematicidal composition can be incorporated in soil. Another way would be to infuse the nematicidal composition into the soil.

Instead, it will be understood that the administration or application of the nematicidal composition may include application of the nematicidal composition to plant or crop seed or seedlings by dry or wet seed dressing, seed pelleting, or by gel encapsulation of the seeds or seedlings.

The curcin or curcin-like protein, e.g., in the form of a nematicidal composition as hereinbefore described, may be administered or applied to soil, or incorporated in soil, such that the concentration of the curcin or curcin-like protein is in the range of about 0.1 kg/hectare to about 50 kg/hectare, preferably from about 0.5kg/ hectare to about 25 kg/ hectare, more preferably from about 1 kg/ hectare to about 20 kg/ hectare, e.g., about 10 kg/ hectare.

The invention will now be described, by way of example only, with reference to the following Example, comprising two experiments and bioassays, a tomato pot trial, and the accompanying drawings.

In the drawings,

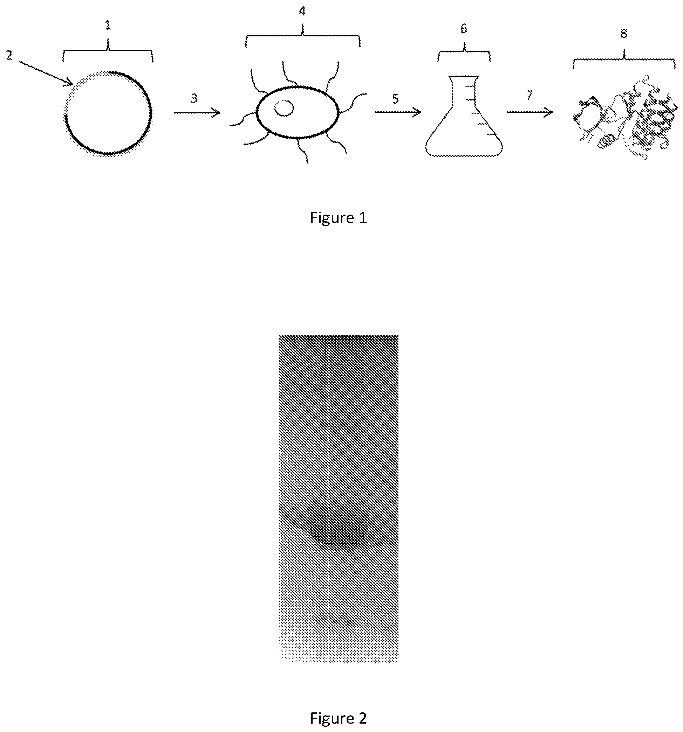

Figure 1 shows schematically a process for producing an engineered, bio-based curcin-like protein for use in the nematicidal composition of the invention;
Figure 2 shows an image of a slab gel result of SDS-PAGE analysis for a purified engineered curcin-like protein produced using the process of Figure 1;

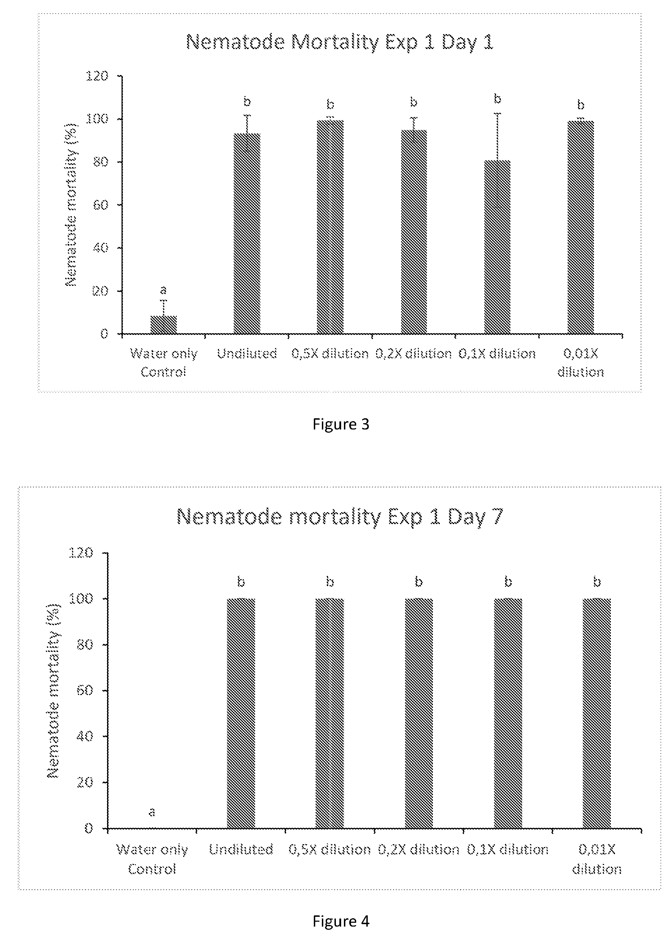

Figure 3 shows a graph of nematode mortality after exposure for 24 hours to different concentrations of the engineered curcin-like protein produced by the process of Figure 1, with water as a control;
Figure 4 shows a graph of nematode mortality after exposure for 7 days to different concentrations of the engineered curcin-like protein produced by the process of Figure 1, with water as a control;

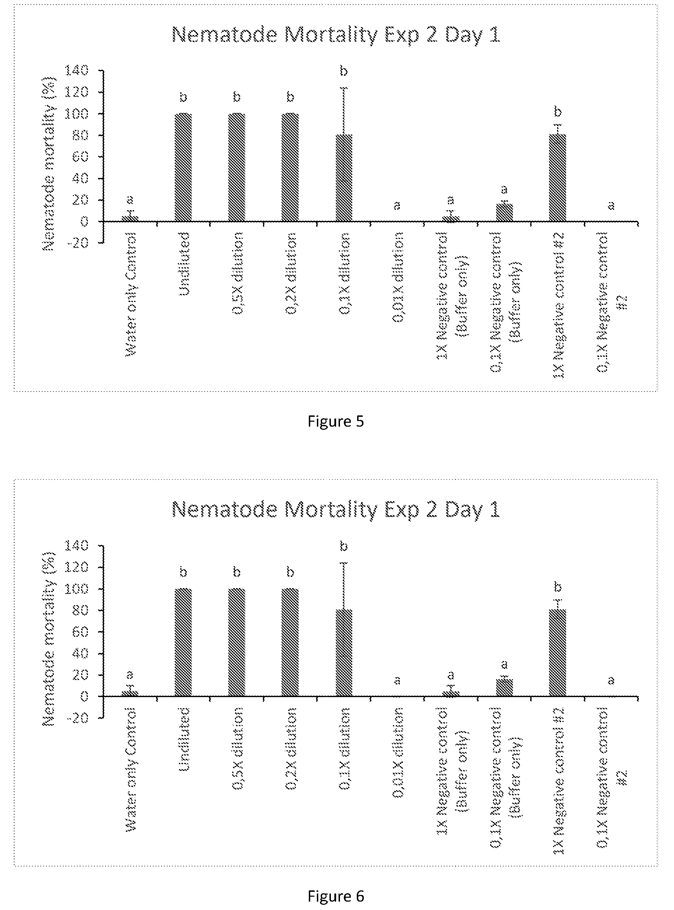

Figure 5 shows a graph of nematode mortality after exposure for 24 hours to different concentrations of the engineered curcin-like protein produced by the process of Figure 1, also using buffer as a control;
Figure 6 shows a graph of nematode mortality after exposure for 7 days to different concentrations of the engineered curcin-like protein produced by the process of Figure 1, also using buffer as a control;

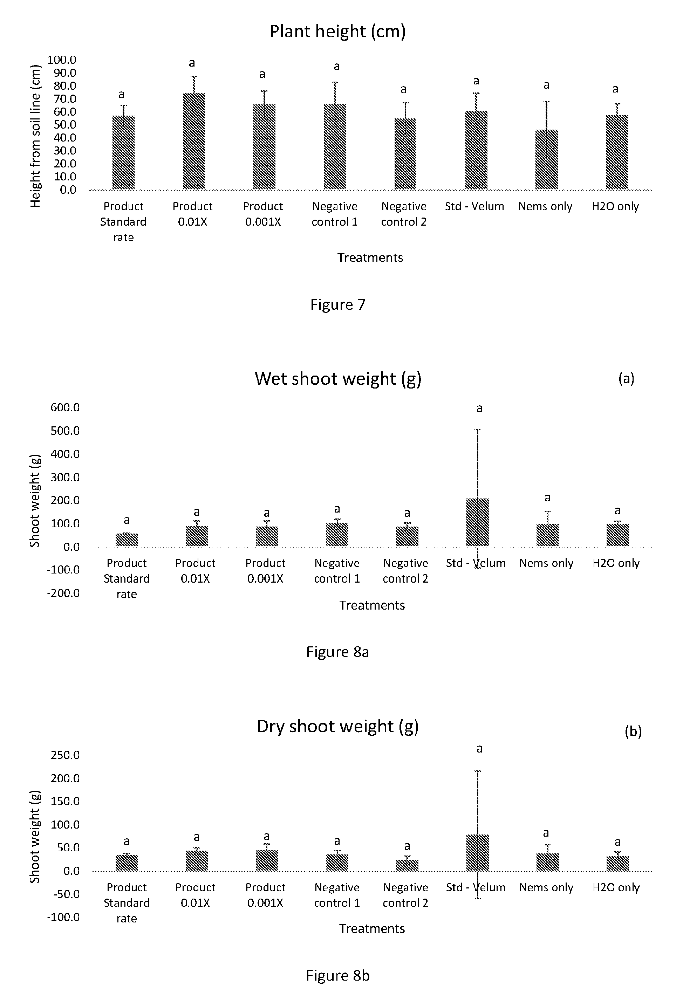

Figure 7 shows tomato plant height at 14 weeks after application of varying treatments during the tomato pot trial. Means with the same letter are not significantly different at the 5% significance level using a two-tailed t-test. Where data were not normal, data were log transformed before analysis, but back transformed means are presented;
Figures 8(a) + (b) show tomato wet (a) and dry (b) shoot weight at 14 weeks after application of varying treatments during the tomato pot trial. Means with the same letter are not significantly different at the 5% significance level using a two-tailed t-test. Where data were not normal, data were log transformed before analysis, but back transformed means are presented;

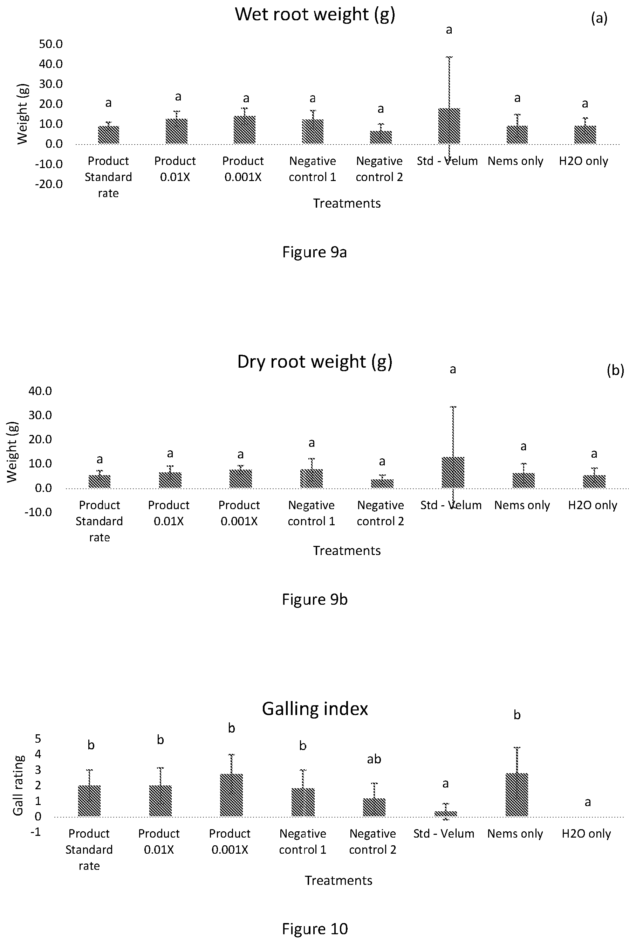

Figure 9(a) + (b) show tomato wet (a) and dry (b) root weight at 14 weeks after application of varying treatments during the tomato pot trial. Means with the same letter are not significantly different at the 5% significance level using a two-tailed t-test. Where data were not normal, data were log transformed before analysis, but back transformed means are presented;
Figure 10 shows a galling index of tomato roots at 14 weeks of the tomato pot trial. Means with the same letter are not significantly different at the 5% significance level using a two-tailed t-test. Where data were not normal, data were log transformed before analysis, but back transformed means are presented;

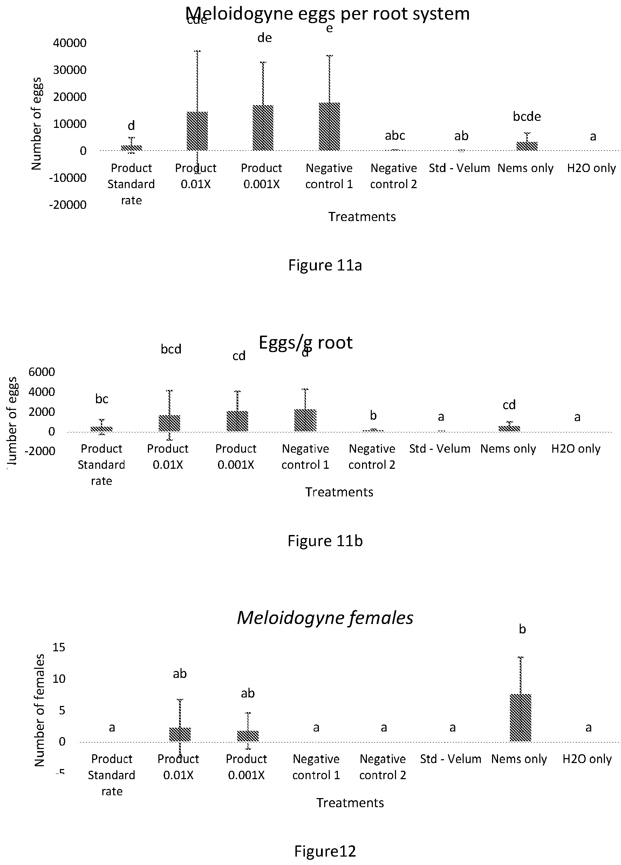

Figure 11a shows the number of *Meloidogyne* eggs per tomato root system at 14 weeks of the tomato pot trial. Means with the same letter are not significantly different at the 5% significance level using a two-tailed t-test. Where data were not normal, data were log transformed before analysis, but back transformed means are presented;
Figure 11b shows the number of *Meloidogyne* eggs per g roots at 14 weeks of the tomato pot trial. Means with the same letter are not significantly different at the 5% significance level using a two-tailed t-test. Where data were not normal, data were log transformed before analysis, but back transformed means are presented;
Figure 12 shows the number of *Meloidogyne javanica* females present in the roots (5g) at 14 weeks of the tomato pot trial. Means with the same letter are not significantly different at the 5% significance level using a two-tailed t-test. Where data were not normal, data were log transformed before analysis, but back transformed means are presented;

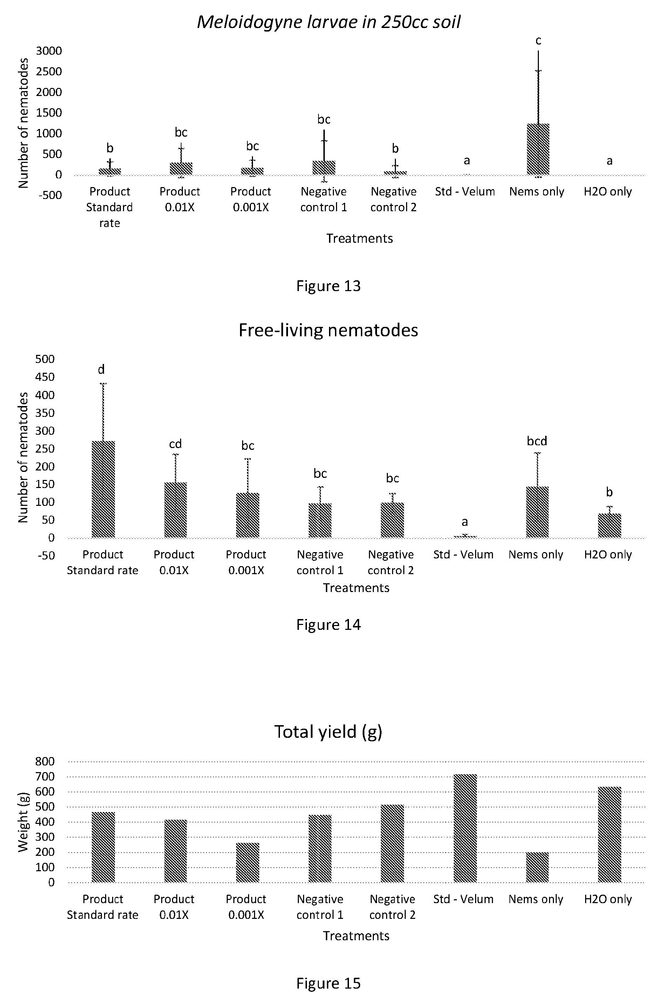

Figure 13 shows the number of *Meloidogyne javanica* juveniles present in the soil (250ml) at 14 weeks of the tomato pot trial. Means with the same letter are not significantly different at the 5% significance level using a two-tailed t-test. Where data were not normal, data were log transformed before analysis, but back transformed means are presented;
Figure 14 shows the number of free-living nematodes present in the soil (250ml) at 14 weeks of the tomato pot trial. Means with the same letter are not significantly different at the 5% significance level using a two-tailed t-test. Where data were not normal, data were log transformed before analysis, but back transformed means are presented; and
Figure 15 shows total fruit weight per treatment at 14 weeks of the tomato pot trial. Means with the same letter are not significantly different at the 5% significance level using a two-tailed t-test. Where data were not normal, data were log transformed before analysis, but back transformed means are presented.

A bio-based process to produce an engineered curcin-like protein typically includes the following broad steps:
- Engineer a plasmid containing a nucleotide sequence corresponding to the engineered curcin-like protein.
- Genetically transform a bacteria or fungi or plant with the engineered plasmid.
- Culture or grow the genetically transformed entity.
- Extract newly produced engineered curcin-like protein from the cultured or grown genetically transformed entity.
- Purify engineered curcin-like protein from an extracted solution.

A bio-based process for producing an engineered curcin-like protein using E. *coli* as a genetically transformed entity is schematically illustrate in Figure 1. A person skilled in the art will however appreciate that the invention is not limited to the use of *E. coli,* as the transformed entity can be one of several different strains or organisms since a skilled individual in the art can easily adapt the organism of choice.

More specifically, as illustrated, the process of Figure1 includes the following features or steps:
Reference numeral 1 represents DNA plasmid that contains nucleotide sequences critical for the process of transformation of an organism. The plasmid may contain sequences like an origin of replication (ori), antibiotic resistance (ampicillin or kanamycin etc.), lac operator, enzyme restriction sites and other regulatory elements.
Reference numeral 2 represents that the nucleotide sequence of an engineered curcin-like protein is inserted into the DNA plasmid 1 to facilitate the recombinant production of the engineered curcin-like protein in a transformed organism.
Reference numeral 3 represents that the fully integrated DNA plasmid is inserted into an organism and produces positive clones.
Reference numeral 4 represents positive clones that are selected through antibiotic resistance. The positive clones 4 contain plasmid which enables the recombinant production of engineered curcin-like protein.
Reference numeral 5 represents that the positive clones 4 are transferred to a liquid medium only selecting for the transformed clones.
Reference numeral 6 represents maintaining a culture of the positive clones in the liquid medium until a desired cell count or concentration has been acquired.
Reference numeral 7 represents that the culture 6 is collected and an engineered curcin-like protein is extracted from the cells in a cell culture extract.
Reference numeral 8 represents isolated and purified engineered curcin-like protein separated from other components of the cell culture extract.

### Example

### Material and Methods

### Buffers

| **Buffer and solution name** | **Composition** |
|---|---|
| Lysogeny Broth (LB) liquid media | 10 g/L peptone, 5 g/L yeast extract powder, 5 g/L NaCl |
| 1.5% Lysogeny agar (LA) | 10 g/L peptone , 5 g/L yeast extract powder, 5 g/L NaCl, 15 g/L bacteriological agar |
| IPTG (Stock solution) | 1 M isopropyl-β-D-thiogalactopyranoside (1000X) |
| 1X Lysis, Elution and Wash Buffer (LEW) | 50 mM sodium phosphate, pH 8.0, 300 mM NaCl, 5% glycerol |
| Storage Buffer | 20 mM potassium phosphate, pH 7.50, 50 mM NaCl, 2% glycerol |

### Plasmid Design, DNA and Protein Sequence

The following amino acid sequence (SEQ ID NO: 1) represents one embodiment of a curcin-like protein:

### Engineered curcin-like protein:

The following DNA sequence (SEQ ID NO: 2) was transformed into pET28a, which leads to the production of an engineered curcin-like protein with an N-Terminal His₆-tag:

### Transformation and Recombinant Production

The plasmid encoding for the engineered curcin-like protein was transformed into chemically competent cells following the heat shock method. BL21 (DE3) Codon Plus *E. coli* cells were transformed. One µL of the plasmid (50 ng) was added to 50 µL of competent cells whereafter the cells were incubated for 30 minutes on ice. The cells were then heat shocked at 42°C for 60 seconds and returned to ice for 2 minutes followed by the addition of 800 µL of LB media. The cells were thereafter incubated at 37°C for 60 minutes in a shaking incubator, producing a cell culture. Finally, 125 µL of the cell culture was spread onto 1.5% LA plates containing relevant antibiotics and incubated at 37°C overnight.

Single colonies from the LA plates (transformation plates) were picked and inoculated into 20 mL of LB media containing appropriate antibiotics as a starter culture. The starter culture was incubated at 37°C overnight in a shaking incubator. The starter culture was used to inoculate larger volumes of LB media followed by incubation at 37°C with shaking at 160 rpm. Once the OD₆₀₀ of the larger volume culture reached ^{~} 0.6, the temperature was dropped to 25°C and the larger volume culture was induced with 0.2 mM isopropyl-β-D-thiogalactoside (IPTG). Cultures from the larger volume culture were incubated overnight at 25°C with shaking at 160 rpm. Cells were harvested by centrifugation at 10 000 x g for 10 minutes and resuspended in 1X Lysis Elution Wash (LEW) Buffer. Cells were then lysed by sonication with 20 seconds on and off pulses for 8 minutes total. An insoluble cellular fraction was pelleted by centrifugation at 35 000 x g for 45 minutes. A supernatant (soluble fraction) was collected.

### Purification of engineered curcin-like protein

The soluble fraction containing the His₆-tagged engineered curcin-like protein was enriched by affinity chromatography using nickel-NTA resin in a manual gravity column. The soluble fraction was incubated with the Ni-NTA resin for 60 minutes at 4°C on a roller mixer. After binding engineered curcin-like protein, the resin was washed with 50 bed volumes of 1X LEW Buffer, producing a purified fraction. The purified fraction was eluted using 1X LEW Buffer + 200 mM imidazole. The eluted fraction from the Ni-NTA resin was concentrated and buffer exchanged in a Pierce Protein Concentrator into the storage buffer. A sample of the engineered curcin-like protein was analysed for purity and possible contamination using SDS-PAGE (sodium dodecyl sulfate-polyacrylamide gel electrophoresis).

### Nematicide Bioassay

### Experiment 1:

One mL of water containing approximately 50 freshly hatched *Meloidogyne javanica* juveniles were added to a 1.5 mL microcentrifuge tube. The tubes were allowed to stand for 30 minutes, allowing the nematodes to settle. After 30 minutes, extra water was removed, leaving only 100 µl of water containing the nematodes in the tube. One mL of the purified engineered curcin-like protein at 0.2 mg/mL concentration was added to the tubes. The purified engineered curcin-like protein was tested undiluted and at a 0.5, 0.2, 0.1 and 0.01X dilution. A water only control was also tested, where 1 mL of sterile distilled water was added to the tubes instead of the purified engineered curcin-like protein. After 24 hours and 7 days, the nematodes were rinsed in ethanol and the numbers of dead and living nematodes were recorded.

### Experiment 2:

One mL of water containing approximately 80 freshly hatched *Meloidogyne javanica* juveniles were added to a 1.5 mL microcentrifuge tube. Tubes were allowed to stand for 30 minutes, to allow the nematodes to settle. After 30 minutes, extra water was removed, leaving only 100µl of water containing the nematodes in the tube. One ml of the purified engineered curcin-like protein at 0.2 mg/mL concentration was added to the tubes. The purified engineered curcin-like protein was tested undiluted and at a 0.5, 0.2, 0.1 and 0.01X dilution. A water only control was also tested, where 1 mL of sterile distilled water was added to the tubes instead of the purified engineered curcin-like protein. Two additional negative controls were also tested, undiluted and at a 0,1X dilution. After 24 hours and 7 days, nematodes were rinsed in ethanol and the numbers of dead and living nematodes were recorded.

### Statistical Analyses

All data was subjected to summary statistics to determine normality. Data was then subjected to a single factor ANOVA using Microsoft^{®} Excel^{®}. Significant differences between treatments were determined using Students' t-test in Microsoft^{®} Excel^{®}.

### Results

### Purification of engineered curcin-like protein

Following the production and purification of the engineered curcin-like protein, it was confirmed and viewed using SDS-PAGE (Figure 2). There is one large clear band of the engineered curcin-like protein with three smaller bands of unknown proteins present on the SDS-PAGE gel. It is believed that the proteins of the three smaller bands will most probably not interfere with the nematicidal bioassays, in view of their relative low concentrations compared to that of the engineered curcin-like protein.

### Nematicide Bioassay

Experiment 1 showed that compared to the water only negative control, there was a nematicidal activity at even a 100-fold dilution of the engineered curcin-like protein active (Figures 3 and 4). Error bars represent Standard Deviation of the mean. Data was analysed using a one-way ANOVA. Means with the same letter are not significantly different at the 5% significance level using Student's t-test.

Given the results shown in Figures 3 and 4, it was questioned whether the buffer conditions could possibly play a role in the nematicidal activity. The buffer components used are generally used to stabilise protein in solution but it was hypothesised that the buffer may have an effect on the mortality of the nematodes.

After testing the engineered curcin-like protein active initially, two negative controls were thus additionally tested, which represented the buffer only components at two separate pH levels, namely pH 7.5 and pH 8.0 respectively. Comparing the results from the 2^{nd} experiment with the 1^{st} experiment, it is clear that the active component still shows nematicidal activity, but this time not at the 100-fold dilution (Figures 5 and 6). Error bars represent SD of the mean. Data were analysed using a one-way ANOVA. Means with the same letter are not significantly different at the 5% significance level using Student's t-test.

Experiment 2 day 1 versus day 7 showed that the engineered curcin-like protein has a quick-acting nematicidal activity at a level as low as 10-fold dilution (Figure 5). The negative control 2, pH 8.0 also showed significant nematicidal activities at an undiluted concentration but not at the 10-fold dilution at day 1. But at the 10-fold dilution after 7 days significant nematicidal activity was observed. A generally acceptable pH range of soil is between about 5.5 and about 7.5, which explains why the high pH level of negative control 2 shows nematicidal activity (Figure 6).

Since the engineered curcin-like protein active was prepared with the buffer components of negative control 1, all the experiments showed that the engineered curcin-like protein illustrates a significant nematicidal activity compared to negative control 1 (Figures 5 and 6).

### Tomato pot trial

A net-house trial to evaluate the ability of various products, including nematicidal compositions in accordance with the invention, to control root-knot nematode (*Meloidogyne javanica*) in soil on tomatoes was conducted. More specifically, the objective of the net-house trial was to determine the ability of various products or compositions, including nematicidal compositions in accordance with the invention, to control root-knot nematode, *Meloidogyne javanica* on tomato, (*Lycopersicon esculentum* L. *cv* Moneymaker) in a net-house under field/prevailing temperature conditions. This preliminary tomato plant bioassay gave an indication of the possible effect of the products on the reproductive ability of *Meloidogyne javanica.* In addition, plant growth was measured.

### Materials and methods

A sandy field soil was transferred to large pots of 320 x 320mm. The pots were inoculated on Day 1 with 1 500 *M. javanica* eggs and larvae concentrated in 10 ml of water. Treatments as described in Table 1, were applied on Day 2. Healthy 8-week-old tomato seedlings were planted into the pots. Each treatment was replicated six times with 1 plant per repetition and arranged in a randomised complete block design. Pots were maintained in the net-house for 13 weeks.

In the following discussion, "Product" refers to an aqueous nematicidal composition in accordance with the invention comprising 20 mM potassium phosphate, 10 mM NaCl, 2% glycerol and curcin-like protein, with pH 7.0 and "standard rate" means "Product" with curcin-like protein at 0.2 mg/ml concentration.

"Negative control 1" means an aqueous composition comprising 20 mM potassium phosphate, 10 mM NaCl, and 2% glycerol, with pH 7.0.

"Negative control 2" means an aqueous composition comprising 20 mM potassium phosphate, 10 mM NaCl, and 2% glycerol, with pH 8.0.

"Standard nematicide" means Velum^{®} Prime 400 SC, a fluopyram nematicide produced by Bayer Crop Science as a composition with a concentration of 400 g/l of fluopyram, applied diluted with water in accordance with the manufacturer's prescription.

**Table 1. Treatments applied to pots inoculated with a set concentration of M javanica**

| **Treatment** | | **Application** |
|---|---|---|
| | 1. Product @ standard rate | On soil - pre-plant |
| | 2. Product @ 0.01 x standard rate | On soil - pre-plant |
| | 3. Product @ 0.001 x standard rate | On soil - pre-plant |
| | 4. Negative control 1 | On soil - pre-plant |
| | 5. Negative control 2 | On soil - pre-plant |
| | 6. Standard nematicide | On soil - pre-plant |
| | 7. Untreated control (nematodes only) | Not applicable |
| | 8. Water only | Not applicable |

The plants were harvested approximately 14 weeks after planting.

Plants were cut at the soil line and all the above-ground biomass dried and weighed. All the roots were removed from the soil and once all assessments on the roots were complete, the roots were dried, and the root weight recorded.

The roots were visually rated for galls on a scale of 0 - 4 where 0 = no galls, 1 = < 25% galls, 2 = 50% galls, 3 = ± 75% galls and 4 = a root system covered with galls.

*Meloidogyne* eggs were extracted from the roots by vigorously agitating individual root systems in 20% household bleach for 90 seconds and washing the liberated eggs on a 500-mesh sieve with copious amounts of water. The eggs were then purified by centrifugal flotation in a 48% sucrose solution, rinsed in water, and counted.

The females were extracted from the roots by vigorously agitating individual root systems in a pectinase solution. The females were then purified by centrifugal flotation in a 48% sucrose solution, rinsed in water, and counted.

*Meloidogyne* larvae and free-living nematodes were extracted from the soil using the centrifugal flotation method.

The total number of eggs per root system was recorded and the total eggs per gram of root was calculated using the dry root weight. Plants were evaluated for phytotoxicity.

The 14-week-old plants were stripped of fruit and the fruit photographed and weighed as a total for each treatment.

All the resulting data were assessed for normality of distribution using the mean, median, skewness and kurtosis values. Where data were not normal, data were transformed using the log(x+1) transformation. All data were analysed using a single factor analysis of variance and significant differences between treatments assigned using individual t-tests.

### Results

### Plant height (cm)

Plant height was measured from the soil line. No significant differences were measured between treatments, although the Product at 0.001 X standard rate did have a higher mean height than any of the other treatments (Figure 7).

### Wet and dry shoot weight (g)

The shoots were weighed directly after harvest, as well as 7 days after being air-dried. No significant differences in wet or dry shoot weight were observed between any of the treatments at 14 weeks (Figure 8a + 8b), although the Standard nematicide treatment did show an increased wet and dry shoot weight when compared to the other treatments.

### Wet and dry root weight (g)

The highest wet and dry root weight was observed with the Standard nematicide treatment, but this was not significantly different when compared to the other treatments (Figures 9(a) and 9(b)).

### Galling index

The Nematode only control and the Product at 0.001 X standard rate had the highest gall ratings, which differed significantly from the Standard nematicide treatment and the water only control (Figure 10).

### Meloidogyne egg count

The highest number of eggs (per root system) were extracted from the Nematodes only control. Very low numbers of eggs were extracted from the treatment with the Product at standard rate, Negative control 2 and the Standard nematicide treatment (Figure 11a).

The number of eggs per gram roots was calculated and showed the same tendency as the eggs per root system (Figure 11b).

### Meloidogyne female count

Most treatments, except the Product at 0.01 X standard rate and 0.001 X standard rate, showed a significantly lower *Meloidogyne* female count compared with the Nematode only control (Figure 12).

### Nematode larval counts

The *Meloidogyne* larval counts in the soil showed high variation, but the Standard nematicide treatment, Negative control 2 and the Product at standard rate were significantly lower than the Nematode only control (Figure 13).

### Free-living nematode counts

The free-living nematode (non-plant feeding) counts were significantly higher in the treatment with the Product at standard rate, showing that this treatment had the least detrimental effect on the free-living nematodes in the soil (Figure 14). The treatment with the lowest free living nematode count was the Standard nematicide treatment.

### Phyto-toxicity

Some phytotoxicity was observed in the Standard nematicide treatment at first, but the plants recovered after about 2 weeks. Plants looked chemically burnt and stunted. No other phytotoxicity was observed in any of the treatments.

### Yield

All the available fruit that was present on the day that the trial was terminated was harvested and weighed as a total for the treatment (Figure 15).

### Conclusions

Both the Negative control 2 and the Standard nematicide treatment suppressed nematode gall formation. The Negative control 2 also has a comparable suppression on the formation of eggs to the Standard nematicide treatment. The Product at standard rate also had a significantly lower egg count than other treatments, but not significantly lower than the Nematode only control. The number of females for the Product at standard rate, Negative control 1 and 2 and Standard nematicide treatment were very low to zero. The *Meloidogyne* larval counts in the soil showed more or less the same tendency, but the Negative control 1 did not show as good a suppression. The Product at standard rate had the lowest impact on the free-living nematodes that were naturally present in the soil.

Overall, the treatments that showed the best promise in suppression of *M*. *javanica* development of different developmental stages were the Product at standard rate and the Negative control 2 when compared to the Standard nematicide treatment and the Nematode only control.

It is believed that the buffer used in the Product during the tomato pot trial may have been working against the active ingredient in the Product, reducing the effectiveness of the active ingredient as a nematicide. Even so, the Product showed significant activity as a nematicide during some developmental stages of the nematodes.

The invention, as illustrated, advantageously provides an isolated and purified nematicidal active ingredient which can be used in a nematicidal composition and in a method of controlling nematodes. The nematicidal active ingredient is a protein obtained from natural material, or is engineered to correspond closely to a protein obtained from natural material, and is expected to show fewer undesirable side effects compared to at least some commercially available nematicides that are based on toxic synthesised chemicals.

## Claims

1. Use of isolated and purified curcin or a curcin-like protein as a nematicide against plant parasitic nematodes,
wherein the curcin or curcin-like protein is a protein which has at least 90%, or at least 95%, or at least 96%, or at least 97%, or at least 98%, or at least 99%, or 100% sequence identity with the amino acid sequence of SEQ ID NO: 1.

2. A method of controlling plant parasitic nematodes, the method including administering or applying to the locus of the nematodes to be controlled a nematicidal effective amount of curcin or a curcin-like protein, wherein the curcin or curcin-like protein is a protein which has at least 90%, or at least 95%, or at least 96%, or at least 97%, or at least 98%, or at least 99%, or 100% sequence identity with the amino acid sequence of SEQ ID NO: 1.

3. The method according to claim 2, wherein the nematodes are selected from soil-dwelling, microscopic, un-segmented, round worms that are parasitic to a plant growing in the soil.

4. The method according to claim 2 or 3, wherein the curcin or curcin-like protein is administered or applied in the form of a nematicidal composition.

5. The method according to claim 4, wherein the nematicidal composition is administered or applied as a liquid at a concentration of the curcin or curcin-like protein of between 0.05g/l and 1.0g/l, or between 0.1g/l and 0.5g/l, or between 0.15g/l and 0.3g/l.

6. The method according to any of claims 2 to 5, wherein the nematodes are selected from the group consisting of root-knot nematodes, cyst nematodes and root lesion nematodes.

7. The method according to claim 6, wherein the root-knot nematodes are selected from the genus *Meloidogyne* and/or wherein the nematodes are in the form of eggs, females or larvae.

8. The method according to any of claims 2 to 7, wherein the curcin or curcin-like protein is administered or applied to soil, or incorporated in soil, such that the concentration of the curcin or curcin-like protein is in the range of 0.1 kg/hectare to 50 kg/hectare, or from 0.5kg/ hectare to 25 kg/ hectare, or from 1 kg/ hectare to 20 kg/ hectare.

## Patentansprüche

1. Verwendung von isoliertem und gereinigtem Curcin oder eines curcinartigen Proteins als Nematizid gegen pflanzenparasitäre Nematoden, wobei das Curcin oder curcinartige Protein ein Protein ist, das wenigstens 90% oder wenigstens 95% oder wenigstens 96% oder wenigstens 97% oder wenigstens 98% oder wenigstens 99% oder 100% Sequenzidentität mit der Aminosäuresequenz von SEQ ID Nr. 1 aufweist.

2. Verfahren zur Bekämpfung von pflanzenparasitären Nematoden, wobei das Verfahren das Verabreichen einer nematizid wirksamen Menge Curcin oder eines curcinartigen Proteins an zu bekämpfende Nematoden oder Auftragen desselben auf deren Standort umfasst, wobei das Curcin oder curcinartige Protein ein Protein ist, das wenigstens 90% oder wenigstens 95% oder wenigstens 96% oder wenigstens 97% oder wenigstens 98% oder wenigstens 99% oder 100% Sequenzidentität mit der Aminosäuresequenz von SEQ ID Nr. 1 aufweist.

3. Verfahren gemäß Anspruch 2, wobei die Nematoden aus bodenbewohnenden, mikroskopisch kleinen, unsegmentierten Rundwürmern, die Parasiten einer im Boden wachsenden Pflanze sind, ausgewählt sind.

4. Verfahren gemäß Anspruch 2 oder 3, wobei das Curcin oder curcinartige Protein in Form einer nematiziden Zusammensetzung verabreicht oder aufgetragen wird.

5. Verfahren gemäß Anspruch 4, wobei die nematizide Zusammensetzung als Flüssigkeit mit einer Konzentration des Curcins oder curcinartigen Proteins von 0,05 g/l bis 1,0 g/l oder von 0,1 g/l bis 0,5 g/l oder von 0,15 g/l bis 0,3 g/l verabreicht oder aufgetragen wird.

6. Verfahren gemäß einem der Ansprüche 2 bis 5, wobei die Nematoden aus der Gruppe ausgewählt sind, die aus Wurzelgallennematoden, Zystennematoden und Wurzelläsionsnematoden besteht.

7. Verfahren gemäß Anspruch 6, wobei die Wurzelgallennematoden aus der Gattung *Meloidogyne* ausgewählt sind und/oder wobei die Nematoden in Form von Eiern, Weibchen oder Larven vorliegen.

8. Verfahren gemäß einem der Ansprüche 2 bis 7, wobei das Curcin oder curcinartige Protein auf den Boden so verabreicht oder aufgetragen oder in den Boden eingearbeitet wird, dass die Konzentration des Curcins oder curcinartigen Proteins im Bereich von 0,1 kg/Hektar bis 50 kg/Hektar oder von 0,5 kg/Hektar bis 25 kg/Hektar oder von 1 kg/Hektar bis 20 kg/Hektar liegt.

## Revendications

1. Utilisation de curcine ou d'une protéine de type curcine isolée et purifiée comme nématicide contre des nématodes parasites des plantes,
dans laquelle la curcine ou protéine de type curcine est une protéine qui a au moins 90 %, ou au moins 95 %, ou au moins 96 %, ou au moins 97 %, ou au moins 98 %, ou au moins 99 %, ou 100 % d'identité de séquence avec la séquence d'acides aminés de SEQ ID NO : 1.

2. Méthode de lutte contre des nématodes parasites des plantes, la méthode comportant l'administration ou l'application sur le locus des nématodes contre lesquels lutter d'une quantité efficace nématicide de curcine ou d'une protéine de type curcine, dans laquelle la curcine ou protéine de type curcine est une protéine qui a au moins 90 %, ou au moins 95 %, ou au moins 96 %, ou au moins 97 %, ou au moins 98 %, ou au moins 99 %, ou 100 % d'identité de séquence avec la séquence d'acides aminés de SEQ ID NO : 1.

3. Méthode selon la revendication 2, dans laquelle les nématodes sont sélectionnés parmi des vers ronds microscopiques, non segmentés, vivant dans le sol qui sont parasites pour une plante qui pousse dans le sol.

4. Méthode selon la revendication 2 ou 3, dans laquelle la curcine ou protéine de type curcine est administrée ou appliquée sous la forme d'une composition nématicide.

5. Méthode selon la revendication 4, dans laquelle la composition nématicide est administrée ou appliquée sous forme d'un liquide à une concentration de la curcine ou protéine de type curcine comprise entre 0,05 g/l et 1,0 g/l, ou entre 0,1 g/l et 0,5 g/l, ou entre 0,15 g/l et 0,3 g/l.

6. Méthode selon l'une quelconque des revendications 2 à 5, dans laquelle les nématodes sont sélectionnés parmi le groupe consistant en des nématodes à galles, nématodes à kyste et nématodes radicicoles.

7. Méthode selon la revendication 6, dans laquelle les nématodes à galles sont sélectionnés parmi le genre *Meloidogyne* et/ou dans laquelle les nématodes sont sous la forme d'œufs, de femelles ou de larves.

8. Méthode selon l'une quelconque des revendications 2 à 7, dans laquelle la curcine ou protéine de type curcine est administrée ou appliquée sur le sol, ou incorporée dans le sol, de sorte que la concentration de la curcine ou protéine de type curcine est dans la plage de 0,1 kg/hectare à 50 kg/hectare, ou de 0,5 kg/hectare à 25 kg/hectare, ou de 1 kg/hectare à 20 kg/hectare.
